# EUROPÄISCHE PATENTSCHRIFT

(11) **EP 1 457 673 B1**
(45) Veröffentlichungstag und Bekanntmachung des Hinweises auf die Patenterteilung: **30.12.2009**
(21) Anmeldenummer: 04004906.6
(22) Anmeldetag: 03.03.2004
(51) Int. Cl.: F03D 11/00, F16C 35/063

(54) **Abtriebskonfiguration für Windenergieanlagen**
Wind turbine rotor support arrangement.
Disposition de support de rotor d'éolienne

(30) Priorität: 10.03.2003 DE 10310639
(43) Veröffentlichungstag der Anmeldung: 15.09.2004
(73) Patentinhaber: Limbeck, Volker, 26670 Uplengen (DE)
(72) Erfinder: Limbeck, Volker, 26670 Uplengen (DE)
(74) Vertreter: Kloiber, Thomas

(56) Entgegenhaltungen:
- EP-A- 0 037 002
- WO-A1-2004/027260
- US-A- 4 537 519
- US-A- 4 641 977
- US-A- 5 269 622
- US-A- 5 660 484

## Beschreibung

Die vorliegende Erfindung betrifft eine Abtriebskonfiguration für Windenergieanlagen bestehend aus Nabe, Rotorwelle, Hauptlager und Schrumpfscheibe, bei der eine Axialkraft des Rotors in dem ersten Hauptlager der Rotorwelle abgestützt wird und ein Drehmoment mittels der auf der Rotorwelle angeordneten Schrumpfscheibe in den Eingang eines Generators, gegebenenfalls mit vorgeschaltetem Getriebe mit Hohlwelle, geleitet wird.

Die maschinentechnische Anlage einer Windenergieanlage besteht im wesentlichen aus den folgenden Komponenten, von der Rotorseite beginnend betrachtet: Nabe zur Befestigung der Rotorblätter, Hauptwelle mit zugehörigen Lagern, Wellenbremse, Kupplung, Getriebe und Generator. Diese maschinentechnische Anlage ist so dimensioniert, daß normale Betriebszustände mit hoher Zuverlässigkeit bewältigt werden.

Die Anlage muß aber auch seltene, beim Betrieb einer Windenergieanlage bei Gewittern oder in Sturmböen auftretende Betriebs- und Störzustände bewältigen können, wenn z. B. die Rotorblätter aus Richtung des maschinentechnischen Anlagegehäuses angeströmt werden. Dieser Betriebszustand führt zu einer Axialkraft des Rotors an der Rotorwelle in Richtung der Rotornabe, also einer dem Normalbetrieb entgegengesetzten Richtung der Axialkraft.

Nach dem Stand der Technik, sorgt eine direkt am Hauptlager befindliche Wellenmutter für die Einleitung der erwähnten axialen Kräfte in das Hauptlager. Die Rotorwelle weist daher zur axialen Befestigung der Wellenmutter ein Trapezgewinde auf, über dessen Flanken die axialen Kräfte auf das Gewinde der Wellenmutter und über diese in das Hauptlager eingeleitet werden.

Diese Art der axialen Fixierung des Hauptlagers auf der Rotorwelle bedingt eine aufwendige und damit kostenintensive Rotorwellen- sowie Wellenmutterfertigung.

Aus der EP 0 037 002 A ist eine Lagerung für den Rotor einer Windenergieanlage bekannt. Zur Erreichung einer kompakten kurzen Bauweise der Lagerung wird vorgeschlagen, dass eine Abstützung gondelseitig in einer Hülse endet, in der die Außenringe der axial im Abstand angeordneten Wälzlager drehfest aufgenommen sind, deren Innenringe auf einem an der Gondel angeflanschten in die Hülse ragenden Getriebegehäuse in der Nähe seiner Stirnseiten drehfest gehalten sind.

Die US 4,641,977 macht ein Lagerungssystem mit einer Abstandshülse vorbekannt.

Die US 4,537,519 offenbart eine Wellenfixiervorrichtung für Lageranordnungen, bei der vermittels eines ringförmigen Vorsprungs Scherkräfte in Biegekräfte umgewandelt werden.

Die US 5,269,622 offenbart einen Konusspannsatz mit zwei auf einer zylindrischen Büchse angeordneten Konusringen, die durch axiale Spannschrauben gegeneinander anziehbar sind.

Der US 5,660,484 ist eine Welle mit einer Lageranordnung zu entnehmen, wobei zur axialen und konzentrischen Fixierung des Lagers auf der Welle eine elastisch verformbare Anordnung auf der Welle verschoben wird, bis deren Vorderkante das Ende der Welle berührt.

Aufgabe der vorliegenden Erfindung ist es daher, eine Abtriebskonfiguration für Windenergieanlagen anzugeben, die bei betriebssicherer Kraftübertragung eine kostengünstige Fertigung der Rotorwelle erlaubt.

Diese Aufgabe wird erfindungsgemäß dadurch gelöst, daß das Hauptlager als Festlager zur Aufnahme von Axialkräften in beiden Wellenrichtungen ausgebildet ist, wobei als Sicherungsring eine Schrumpfscheibe zur Abstützung der in Richtung der Nabe gerichteten Axialkräfte vorgesehen ist. Die Erfindung erlaubt es mit Vorteil für die Ableitung der entstehenden Kräfte auf die aufwendig zu fertigende Wellenmutter und das Schneiden des Gewindes auf der Rotorwelle zu verzichten. Überraschenderweise kann die Rotorwelle auch geringer dimensioniert werden, denn die an den Kerben des Trapezgewindes im Bereich der Wellenmutter auftretenden mechanischen Spannungen sind für die Rotorwelle dimensionsbestimmend. Die Schrumpfscheibe erzeugt keine vergleichbare Kerbspannung. Dadurch ist zusätzlich auch der Durchmesser des Hauptlagers kleiner, was weitere Kostensenkungen ermöglicht.

In Ausgestaltung der Erfindung ist vorgesehen, daß zwischen dem Festlager und der Schrumpfscheibe bzw. einer Hohlwelle mit Schrumpfscheibe eine die Welle umhüllende Druckhülse angeordnet ist. Diese Anordnung erlaubt mit Vorteil, eine Schrumpfscheibe, die zur Verbindung der Hohlwelle mit der Rotorwelle und zur Übertragung des Drehmomentes vorgesehen ist, zur zuverlässigen Ableitung der axialen Kräfte in Richtung des Hauptlagers mit zu nutzen. Dadurch, daß das übliche Konstruktionsprinzip, entstehende Kräfte so ortsnah und kurz wie möglich in die tragenden Strukturen, verlassen wurde, konnte überraschenderweise auf die Wellenmutter verzichtet werden. Dazu wird der bereits vorhandenen Schrumpfscheibe eine neue Funktion zugewiesen. Der Rückgriff auf die bereits vorhandene Schrumpfscheibe erlaubt weiterhin mit Vorteil eine kosten- und gewichtsparende geringere Dimensionierung der Rotorwelle und des Hauptlagers, da auf ein aufwendig zu fertigendes Spezialgewinde verzichtet und axiale Kräfte dennoch sicher abgeleitet werden können. Die Druckhülse ist in etwa gewichtsneutral mit einer Wellenmutter, erlaubt jedoch kleinere Wellendurchmesser und spart damit Kosten und Gewicht sowohl bei der Rotorwelle als auch beim Hauptlager. Bei der Rotorwelle kann zusätzlich die Fertigung eines Gewindes entfallen.

Eine vorteilhafte Weiterbildung der Erfindung sieht vor, daß die Druckhülse an ihren Enden Stützringe aufweist. Diese Anordnung erlaubt eine sichere Einleitung der von der Schrumpfscheibe ausgeübten Kräfte in die Druckhülse. Die Ausgestaltung mit Stützringen ist einfach zu fertigen und bietet ausreichend Materialstärke, um eine präzise mechanische Bearbeitung zu ermöglichen.

Weiterhin ist vorgesehen, daß die Schrumpfscheibe auf der Hohlwelle angeordnet ist, und die Druckhülse sich an der Hohlwelle abstützend ausgebildet ist. So kann zur axialen Positionierung der Hohlwelle auf der Rotorwelle auf einen kerbempfindlichen Wellenabsatz verzichtet werden. Das hat vorteilhafterweise zur Folge, dass im Bereich der Hohlwelle die Rotorwelle kleiner, leichter und somit günstiger dimensioniert werden kann. Weiterhin stellt diese Ausgestaltung eine vorteilhaft sichere Verbindung zwischen Rotorwelle und Getriebe her.

In Ausgestaltung der Erfindung ist vorgesehen, daß die Hohlwelle in einem Loslager, bzw. einem Getriebe aufgenommen ausgebildet ist. Vorteilhafterweise ist so eine betriebssichere Drehmomentübertragung von der Rotorwelle auf das Getriebe möglich.

Eine Weiterbildung der Erfindung sieht vor, daß ein Distanzring zur Einleitung der Axialkräfte der Rotorwelle auf einen inneren Lagerring des Hauptlagers vorgesehen ist, wobei dieser Distanzring an seiner zur Nabe gerichteten Seite abgerundet ausgebildet ist. Diese Abrundung ermöglicht den Verzicht auf eine scharfe Kante an der Rotorwelle, so daß keine Kerbkräfte angreifen können. Diese Weiterbildung erlaubt weiterhin eine paßgenaue Abstützung der Rotorwelle an dem inneren Lagerring. Gleichzeitig wird die Montage und die Wartung des Hauptlagers erleichtert, was wiederum Kosten spart.

Demselben Zweck dient die Weiterbildung der Erfindung, daß zwischen innerem Lagerring und Druckhülse ein weiterer Distanzring vorgesehen ist.

Schließlich ist in Ausgestaltung der Erfindung vorgesehen, daß das Hauptlager als Pendelrollenlager ausgebildet ist. Pendelrollenlager haben den Vorteil einer hohen Tragfähigkeit. Durch die Verwendung von Pendelrollenlager können hohe, stoßartige Kräfte aufgenommen werden. Gleichzeitig bleiben sie selbst dann einsatzbereit, wenn größere Durchbiegungen der Rotorwelle und Winkelabweichungen zwischen Rotorwellenachse und der Achse des Hauptlagergehäuses auftreten. Sie stellen somit einen zuverlässigen Betrieb des Abtriebsstranges der Windenergieanlage sicher.

Weitere Vorteile und Einzelheiten der Erfindung ergeben sich aus der nachfolgenden Beschreibung eines Ausführungsbeispiels anhand der Figuren der Zeichnung.

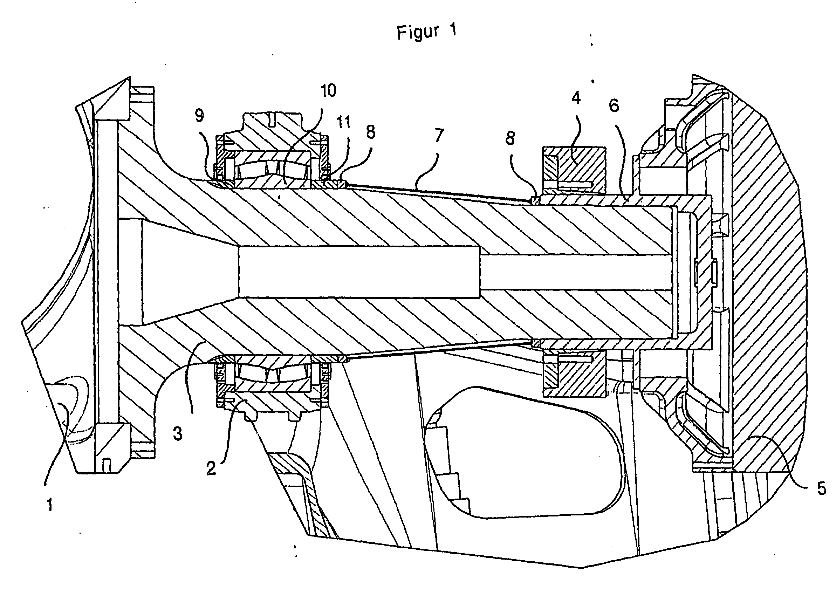

Die einzige Figur 1 zeigt im einzelnen:
Figur 1: einen Vertikalschnitt eines erfindungsgemäßen Abtriebstranges.

Figur 1 zeigt die Rotorwelle 3, die an ihrer Stirnseite die in der Nabe 1 zur Aufnahme der Rotorflügel trägt. Das andere Ende der Rotorwelle 3 ist in einer dem Getriebe 5 zugeordneten Hohlwelle 6 aufgenommen. Die Rotorwelle 3 und die Hohlwelle 6 sind durch eine Schrumpfscheibe 4 kraftschlüssig fest miteinander verbunden.

Figur 1 zeigt weiterhin ein Pendelrollenlager als Hauptlager 2, das als Festlager die Rotorwelle 3 umschließt und die Rotorwelle sowohl radial als auch axial drehbewglich fixiert. Zwischen Schrumpfring 4 und Hauptlager 2 befindet sich eine die Rotorwelle 3 umschließende Druckhülse 7, die sich mit ihren Stützringen 8 zum einen gegen die Hohlwelle 6 und zum anderen gegen den weiteren Distanzring 11 abstützt. Der Distanzring 9 überträgt axiale Kräfte der Rotorwelle 3 in Richtung auf das Getriebe 5 in den inneren Lagerring 10 des Hauptlagers 2.

Entgegengesetzt wirkende axiale Kräfte der Rotorwelle 3 in Richtung der Rotornabe werden zunächst an der Stelle auf die Hohlwelle 6 übertragen, wo diese mittels der Schrumpfschreibe 4 kraftschlüssig mit der Rotorwelle 3 verbunden ist. Die Hohlwelle stützt sich auf der Druckhülse 7 ab, die die Axialkraft auf den weiteren Distanzring 11 und von diesem auf den inneren Lagerring 10 des Hauptlagers 2 überträgt. Die so auf das Hauptlager 2 eingeleiteten Kräfte werden anschließend in dem Gehäuse der maschinentechnischen Anlage der Windenergieanlage abgefangen, so daß für alle Betriebszustände der Windenergieanlage ein sicherer Betrieb möglich ist.

### BEZUGSZEICHENLISTE

- 1: Nabe
- 2: Hauptlager
- 3: Rotorwelle
- 4: Schrumpfscheibe
- 5: Getriebe
- 6: Hohlwelle
- 7: Druckhülse
- 8: Stützringe
- 9: Distanzring
- 10: innerer Lagerring
- 11: weiterer Distanzring

## Patentansprüche

1. Abtriebskonfiguration für Windenergieanlagen bestehend aus Nabe (1), Rotorwelle (3), Hauptlager (2) und axialem Sicherungsring, bei der eine Axialkraft des Rotors in dem Hauptlager (2) der Rotorwelle (3) abgestützt wird, **dadurch gekennzeichnet , daß** das Hauptlager (2) als Festlager zur Aufnahme von Axialkräften in beiden Wellenrichtungen ausgebildet ist, wobei als Sicherungsring eine Schrumpfscheibe (4) zur Abstützung der in Richtung der Nabe (1) gerichteten Axialkräfte vorgesehen ist.

2. Abtriebskonfiguration nach Anspruch 1, **dadurch gekennzeichnet , daß** zwischen Festlager (2) und der Schrumpfscheibe (4) eine die Rotorwelle (3) umhüllende Druckhülse (7) angeordnet ist.

3. Abtriebskonfiguration für Windenergieanlagen bestehend aus Nabe (1), Rotorwelle (3), Hauptlager (2) und axialem Sicherungsring in der Form einer Schrumpfscheibe bei der eine Axialkraft des Rotors in dem Hauptlager (2) der Rotorwelle (3) abgestützt wird, **dadurch gekennzeichnet , daß** das Hauptlager (2) als Festlager zur Aufnahme von Axialkräften in beiden Wellenrichtungen ausgebildet ist, wobei die Rotorwelle (3) und eine Hohlwelle (6) durch die Schrumpfscheibe (4) kraftschlüssig fest miteinander verbunden sind, und zwischen Festlager (2) und Hohlwelle (6) eine die Rotorwelle (3) umhüllende Druckhülse (7) angeordnet ist.

4. Abtriebskonfiguration nach einem der Ansprüche 1 bis 3, **dadurch gekennzeichnet, daß** die Druckhülse (7) an ihren Enden Stützringe (8) aufweist.

5. Abtriebskonfiguration nach einem der Ansprüche 3 bis 4,
**dadurch gekennzeichnet, daß** die Schrumpfscheibe (4) auf der Hohlwelle (6) angeordnet ist, und die Druckhülse (7) sich an der Hohlwelle (6) abstützend ausgebildet ist.

6. Abtriebskonfiguration nach einem der Ansprüche 3 bis 5,
**dadurch gekennzeichnet, daß** die Hohlwelle (6) in einem Loslager, bzw. einem Getriebe (5) aufgenommen ausgebildet ist.

7. Abtriebskonfiguration nach einem der oben stehenden
Ansprüche, **dadurch gekennzeichnet, daß** ein Distanzring (9) zur Einleitung der Axialkräfte der Rotorwelle (3) auf einen inneren Lagerring (10) des Hauptlagers (2) vorgesehen ist.

8. Abtriebskonfiguration nach einem der oben stehenden Ansprüche, **dadurch gekennzeichnet, daß** zwischen innerem Lagerring (10) und Druckhülse (7) ein weiterer Distanzring (11) vorgesehen ist.

9. Abtriebskonfiguration nach einem der oben stehenden Ansprüche, **dadurch gekennzeichnet, daß** das Hauptlager (2) als Pendelrollenlager ausgebildet ist.

## Claims

1. Output configuration for turbines, consisting of a hub (1), a rotor shaft (3), a main bearing (2) and an axial retaining ring, in which an axial force of the rotor is supported in the main bearing (2) of the rotor shaft (3), **characterised in that** the main bearing (2) is formed as a locating bearing for taking up axial forces in both shaft directions, a shrink disc (4) being provided as the retaining ring to support the axial forces directed towards the hub (1).

2. Output configuration according to claim 1, **characterised in that** a clamping sleeve (7) which surrounds the rotor shaft (3) is arranged between the locating bearing (2) and the shrink disc (4).

3. Output configuration for wind turbines, consisting of a hub (1), a rotor shaft (3), a main bearing (2) and an axial retaining ring in the form of a shrink disc, in which an axial force of the rotor is supported in the main bearing (2) of the rotor shaft (3), **characterised in that** the main bearing (2) is formed as a locating bearing for taking up axial forces in both shaft directions, the rotor shaft (3) and a hollow shaft (6) being rigidly and non-positively connected to one another by the shrink disk (4), and a clamping sleeve (7) which surrounds the rotor shaft (3) being arranged between the locating bearing (2) and the hollow shaft (6).

4. Output configuration according to any one of claims 1 to 3, **characterised in that** the clamping sleeve (7) has support rings (8) at the ends thereof.

5. Output configuration according to either claim 3 or claim 4, **characterised in that** the shrink disk (4) is arranged on the hollow shaft (6) and the clamping sleeve (7) is configured so as to be supported on the hollow shaft (6).

6. Output configuration according to any one of claims 3 to 5, **characterised in that** the hollow shaft (6) is configured so as to be received in a non-locating bearing or in a gear mechanism (5).

7. Output configuration according to any one of the preceding claims, **characterised in that** a spacer ring (9) for taking up the axial forces of the rotor shaft (3) is provided on an inner bearing ring (10) of the main bearing (2).

8. Output configuration according to any one of the preceding claims, **characterised in that** a further spacer ring (11) is provided between the inner bearing ring (10) and the clamping sleeve (7).

9. Output configuration according to any one of the preceding claims, **characterised in that** the main bearing (2) is formed as a self-aligning roller bearing.

## Revendications

1. Configuration de sortie pour installations d'énergie éolienne, composée d'un moyeu (1), d'un arbre de rotor (3), d'un roulement principal (2) et d'une bague de sécurité axiale, dans laquelle une force axiale du rotor est supportée dans le roulement principal (2) de l'arbre de rotor (3), **caractérisée par le fait que** le roulement principal (2) est réalisé sous forme de roulement fixe destiné à recevoir les forces axiales dans les deux directions d'axe, comme bague de sécurité étant prévu un disque de contraction (4) destiné à supporter les forces axiales orientées en direction du moyeu (1).

2. Configuration de sortie selon la revendication 1, **caractérisée par le fait qu'**entre le roulement principal (2) et le disque de contraction (4) est disposée une bague de pression (7) entourant l'arbre de rotor (3).

3. Configuration de sortie pour installations d'énergie éolienne, composée d'un moyeu (1), d'un arbre de rotor (3), d'un roulement principal (2) et d'une bague de sécurité axiale sous forme de disque de contraction, dans laquelle une force axiale du rotor est supportée dans le roulement principal (2) de l'arbre de rotor (3), **caractérisée par le fait que** le roulement principal (2) est réalisé sous forme de roulement fixe destiné à recevoir les forces axiales dans les deux directions d'axe, l'arbre de rotor (3) et un arbre creux (6) étant rendus solidaires l'un de l'autre en liaison de force par le disque de contraction (4) et entre le roulement principal (2) et l'arbre creux (6) étant disposée une bague de pression (7) entourant l'arbre de rotor (3).

4. Configuration de sortie selon l'une des revendications 1 à 3, **caractérisée par le fait que** la bague de pression (7) présente, à ses extrémités, des bagues d'appui (8).

5. Configuration de sortie selon l'une des revendications 3 à 4, **caractérisée par le fait que** le disque de contraction (4) est disposé sur l'arbre creux (6), et que la bague de pression (7) est réalisée de manière à s'appuyer sur l'arbre creux (6).

6. Configuration de sortie selon l'une des revendications 3 à 5, **caractérisée par le fait que** l'arbre creux (6) est réalisé reçu dans un roulement libre, ou dans un engrenage (5).

7. Configuration de sortie selon l'une des revendications ci-dessus, **caractérisée par le fait qu'**il est prévu une rondelle d'écartement (9) destinée à introduire les forces axiales de l'axe de rotor (3) sur une bague de roulement intérieure (10) du roulement principal (2).

8. Configuration de sortie selon l'une des revendications ci-dessus, **caractérisée par le fait qu'**il est prévu, entre la bague de roulement intérieure (10) et la bague de pression (7), une autre rondelle d'écartement (11).

9. Configuration de sortie selon l'une des revendications ci-dessus, **caractérisée par le fait que** le roulement principal (2) est réalisé sous forme de roulement à rotule.
